# EUROPEAN PATENT APPLICATION

(11) **EP 1 617 329 A1**
(43) Date of publication of application: **18.01.2006**
(21) Application number: 04291799.7
(22) Date of filing: 13.07.2004
(51) Int. Cl.: G06F 9/46

(54) **Method of generating services**

(71) Applicant: ALCATEL, 75008 Paris (FR)
(72) Inventor: Rössler, Horst, 70794 Filderstadt (DE); Szabo, Peter, 75180 Pforzheim (DE); Neumaier, Armin, 70453 Stuttgart (DE)
(74) Representative: LOUIS, PÖHLAU, LOHRENTZ

(57) **Abstract**

The present invention relates to an access server and a method of generating services for integrating content of existing web portals (21, 22, 23) in an object oriented computing environment (7). A service generator creates descriptions of existing web portals (21, 22, 23). It automatically composes respective mediation objects (41, 42, 43) having an interface for communicating within the object oriented computing environment (7) based on a generic mediation object and the created descriptions of existing web portals (21, 22, 23). The mediation objects (41, 42, 43) receive service request from objects (81 to 89) of the object oriented computing environment (7), the requests using a dedicated object access protocol. They convert the received service request to one or more content access requests adapted to the existing web portals (21, 22, 23) and transmit said content access requests to the corresponding web portal using an appropriate protocol. They receive content data replied from the web portal and transmit said content data to the respective object of the object oriented computing environment using said dedicated object access protocol.

## Description

The present invention is related to a method of generating services for integrating content of existing web portals in an object oriented computing environment and to an access server for integrating content of existing web portals in an object oriented computing environment.

Today, web portals, for example homepages and web sites, provide tremendous amount of information within the Internet. Many individual users have opened their web sites containing various kinds of contents on the Internet. Typically, the information is represented in hyper text markup language (HTML) and delivered using hyper text transfer protocol (HTTP). Typically, the information is browsed using a browser application which presents the content of a web page to the user via a graphical user interface. HTML can disclose a starter index that specify how the delivered information is to be displayed. Also HTML allows servers to present data in specific formats. Further, web pages can be browsed not only on personal computers but also on cellular phones and web phones that have internet connection functions through the use of specific services.

Further, software applications interact in a client/server computing environment distributed over a network. For example, an object invokes the execution of a remote operation by another object located on another computing node. The other object performs operations to process the request and may return data to the invoking object, such as in a read request, or store data in a file contained by the computing note, such as in a write request. Recently, platform independent middle-ware as the Common Object Requests Broker Architecture (= CORBA) provides powerful infrastructure to enable the interaction of objects located at different, distributed computing nodes in such object-computing oriented environment.

To create a web page, users have to have the expertise to operate applications designed specifically for web page creation. For example, US 2003/0061569 A1 describes a communication system including a server and a terminal. The server includes templates and provides a web page creation service. The terminal communicates with the server and includes input and output units to input and output text, images and voice messages. When creation of a web page is requested from the terminal to the server, a user is prompted to input text, images and voice messages to be embedded in a template via a display unit of a terminal. The text, images and voice messages input accordingly our sent to the server as input data are embedded in the template to complete a web page on the server.

On the contrary, to create an object within an object oriented computing environment users have to have the exercise to handle specific description languages and to operate applications designed specifically for object creation in the specific object oriented computing environment, for example CORBA, D-COM or Web Services (WSDL = Web Services Description Language).

It is the object of the present invention to improve the provisioning of the content within an object oriented computing environment.

The object of the present invention is achieved by a method of generating services for integrating content of existing web portals in an object oriented computing environment, the method comprising the steps of: creating a description of an existing web portal and automatically composing a mediation object having an interface for communicating with the object oriented computing environment based on generic mediation object and the created description of an existing web portal, wherein the created mediation object is composed for: receiving a service request from an object of the object oriented computing environment, the request using a dedicated object access protocol; for converting the received service request to one more content access requests adapted to the existing web portal and transmitting said content access request to the corresponding web portal using an appropriate protocol; receiving content data replied from the web portal; and transmitting said content data to the requesting object of the object oriented computing environment using said dedicated object access protocol. The object of the present invention is further achieved by an access server for integrating content of existing web portals in an object oriented computing environment, wherein the access server comprises at least one mediation object having an interface for communicating with the object oriented computing environment, the mediation object is adapted to receive a service request from an object of the object oriented computing environment, the request using a dedicated object access protocol, to convert the received service request to one or more content access requests adapted to a specific existing web portal and transmit said content access request to the corresponding web portal using an appropriate protocol, receive content data replied from the web portal and to transmit said content data to the requesting object of the object oriented computing environment using said dedicated object access protocol.

Various advantages are achieved by this invention: it simplifies the creation of content providing services within an object oriented environment. Further, re-use of existing service resources, components and functionalities already available on the web reduce the efforts to construct new services and components in an object oriented environment and support the creation of innovative new applications. Further, this concept might form a basic integrated component of future authoring tools which simplify the distribution of content within the Internet.

Further advantages are achieved by the embodiments indicated by the dependent claims.

According to a preferred embodiment of the invention, the mediation objects are encoded as web service objects accessible via a simple object access protocol (SOAP). A web service generator can be described as an architecture or method based on generic web service structure and functionality. The mediation objects are composed by the web service generator. One input of the web service generator is a set of uniform resource locators (= URL) which link to a web portal, for example a homepage or any other kind of web page. Additional inputs to the web service generator are templates providing description of data and functionality of web portals and describes the HTLM or XHTML web portals in an abstract way (HTML = Hyper Text Markup Language; XHTML = Extended Hyper Text Markup Language). The web service generator derives web service functionlity and the output is a specific web service accessible via SOAP interface. The purpose of the web service generator is to provide a simple and easy adaptable method for interfacing data and functionality of a web portal in form of a web service.

Reusing existing components and functionalities already available on the web might be an essential factor in constructing new web services and components for supporting innovative applications.

Preferably, the description of the existing web portal comprises an access address for addressing the existing web portal and syntactical information describing access capabilities to content of the web portal. For example, the description comprises one or more uniform resource locators specifying specific web pages which have to be linked to the mediation object. Further, the description comprises data specifying invocation sequences applicable to access content or parts of content of the web portal.

According to a preferred embodiment, the description of an existing web portal comprises semantical information about the content of the web portal. Such semantical information improves the ability to reuse a content of the existing web portal within the object oriented computing environment.

Preferably, the description is formed by a template encoded in an extended markup language. This template provides shape description and composition of one or many web portals.

Preferably, the web service generator designs an XML format for describing at least one part of the web service. It creates from available resources, the web portals, primitive web services. It integrates the parts of the web service wherein integrating and designing a performed by composing primitive web services and web service patterns. Thereby, it generates a XML format for describing the web service and deploy the web service (semi-)automatically.

The designing of the web service or the creation of the web portal description are preferably done in a graphical way via an interactive graphical user interface. This improves the efficiency of service generation process.

According to a preferred embodiment of the invention, the generic object comprises a plurality of object oriented design primitives automatically or semi-automatically selected and substantiated during the composition step based on the description of the existing web portal.

Preferably, the web service generator automatically deploys the web service. The created mediation object is registered in a description server of the object oriented computing environment to make known service properties of the content service provided by said created mediation object to object interacting via the object oriented computing environment. The description server does now offer service addresses and descriptions of content services providing the content of existing web portals within the object oriented computing environment.

Preferably, each mediation object is associated with a dedicated existing web portal and represents the content of this web portal in the object oriented computing environment. This concept improves the mediation object generation process and minimizes the complexity and dependencies of the access server which integrates the content of existing web portals in the object oriented computing environment.

These as well as other features and advantages of the invention will be better appreciated by reading the following detailed description of presently preferred exemplary embodiments taken in conjunction with accompanying drawings of which:
- Fig. 1: is a functional view of a generation process for generating services which integrate content of existing web portals in an object oriented computing environment.
- Fig. 2: is a functional view of an object logic
- Fig. 3: is a block diagram showing an access server according to the present invention and its surrounding computation environment.

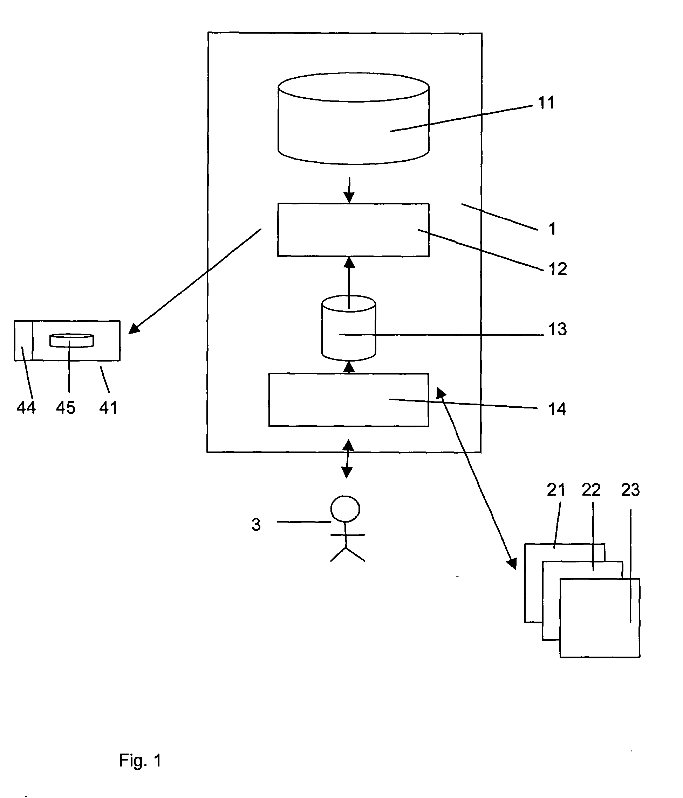

Fig. 1 shows a service generator 1, several web portals 21 to 23, a user 3 and a mediation object 41.

The web portals 21 to 23 are composed of one or more web pages and are for example home pages or web sites. The web pages are, for example, encoded in hyper text markup language (HTML) or extended hyper text markup language (XHTML). Typically, content of these web portals is accessed via hyper text transfer protocol (HTTP). The web portals 21 to 23 provide various contents, for example text or graphical information but also audio or video information. Typically, the web portals 21 to 23 are hosted by one or several web servers accessible via the Internet.

The service generator 1 is constituted by one or several interlinked computers, a software platform and various application programs executed by the system platform formed by the aforementioned hard- and software-platform. The functionalities of the service generator 1 are provided by the execution of the software components of the service generator 1 through its hardware platform.

From functional point of view, the service generator 1 comprises data sets 11 and 13 and control units 12 and 14.

The data set 11 contains a generic mediation object class. This object class comprises a plurality of object oriented design primitives providing various functionalities for integrating a content of existing web portals in an object oriented computing environment. For example, such functionalities comprise functions to execute the necessary protocol steps for accessing different kinds of contents which might be provided by web portals. It comprises functionalities to interact via the HTTP protocol, to access different audio, video and picture formats which might be used by web portals or to interact with data base applications interfaced by such web portals.

Preferably, these designed primitives form sub-classes of the generic mediation object class hold in the data set 11.

The data set 13 comprising a description of an existing web portal, for example a description of the web portal 21. Preferably, the data set 13 is a template encoded in extended markup language (= XML).

The data set 13 stores a description of data and functionality of the web portal 21. It comprises one or several access addresses for addressing the web portal 21 or respective web pages of this web portal. For example, it comprises several uniform resource locators addressing selected web pages of the web portal 21. Further, it comprises syntactical information describing the access capabilities to addressed content, for example the data form used for the encoding of the content on the web portal. These data might specify sequences of request messages necessary to access the content. Further, the data set can contain authorization and authenization information necessary to access specific parts of the content of the web portal 21.

Further, the data set 13 comprises semantical information about the content of the web portal 21. It contains data describing the meaning of the respective data contained in the content of the web portal 21. For example, it specifies that the data represents data of a road map or sailing list or represents sales figures of a specific company.

The control unit 14 collects the data of the data set 13. It creates the data set 13 and establishes its data structure.

Preferably, the control unit 14 has on the one side access to the content of the web portals 21 to 23 and communicates on the other side via a graphical user interface with the user 3. Thereby, the user 3 is in a position to scan via a graphical user interface through the content of a selected web portal, selects and specifies content of interest which should be made available in the object oriented computing environment. Preferably, the control unit 14 provides a simple graphical user interface to the user 3 which makes it really simple even to an untrained user to perform the selection and specification step by simple click to graphically displayed items.

But, it is also possible that the control unit 14 automatically scans web portals and establishes the data set 13 based on a set of predefined rules.

The control unit 12 composes the mediation object 41 which has an interface 44 for communicating within object oriented computing environment based on the data of a generic mediation object specified by the generic mediation object class 11 and the description of an existing web portal specified by the data set 13.

Preferably, the mediation object 41 is a web service encoded in WSDL and having and SOAP interface. But, it is also possible that the mediation object is an object designed for another object oriented computing environment, for example a CORBA object or D-COM object.

The control unit 12 selects and substantiates design primitives stored in the data set 11 during the composition based on the description of the web portal 21 stored in the data set 13.

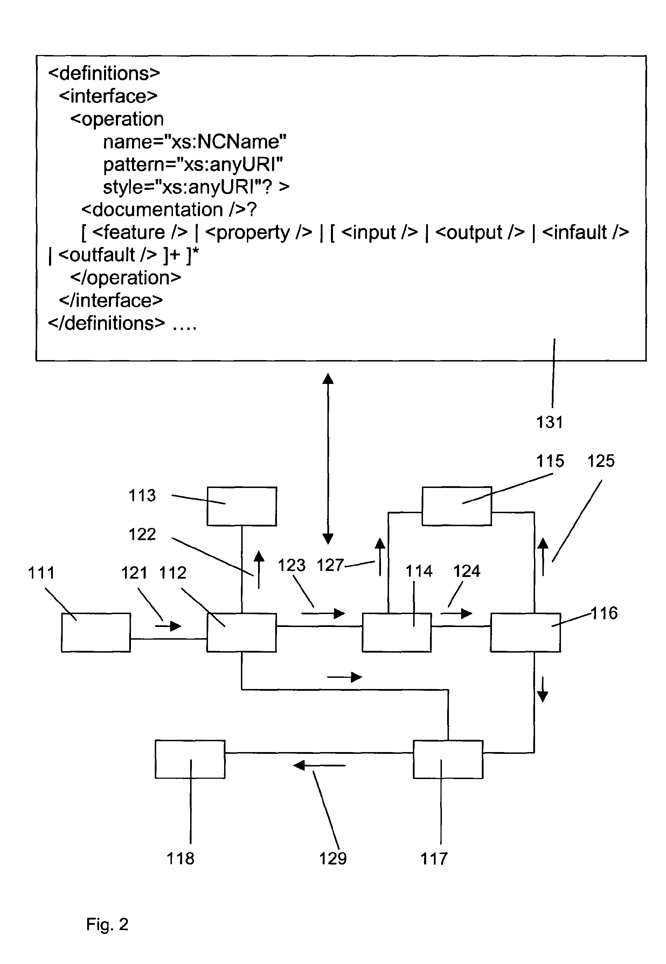

An embodiment of an resulting mediation object logic 45 is in the following exemplified by hand of Fig. 2.

The logic 45 comprises a data set 131 which is an extract of the data set 13 and an execution logic with elements 111 to 117.

The element 111 represents and event handler. In a first step 121 it handles an incoming event which is submitted to the element 112 representing a rule engine. In a second step 122 the rule engine matches rule by help of the element 113 representing a rule dictionary.

The element 114, 115, 116, 117 and 118 represents a rule, rule constraint, a rule data object, a rule action and a class loader.

At a step 123, rule constraints are applied by help of the data set 131 on the rule or, if its a new rule, a rule data object and rule constraints are created by help of the data set 131 at steps 124 and 125. Rule constraints are applied at a step 127.

Dependent on the rule action represented by the element 117, the element 118 representing a class loader, loads a class.

The logic 45 is capable to receive a service request from an object of the object oriented computing environment using a dedicated object access protocol via the interface 44. It recognizes and classifies the service request and converts the received service request dependent on the data of the data set 131 to one or more content access request adapted to the web portal 21. It transmits said content access request to the web portal 21 using an appropriate protocol. If it receives content data replied from the web portal, it transmits said content data to the requesting object of the object oriented computing environment using the dedicated object access protocol via the interface 44.

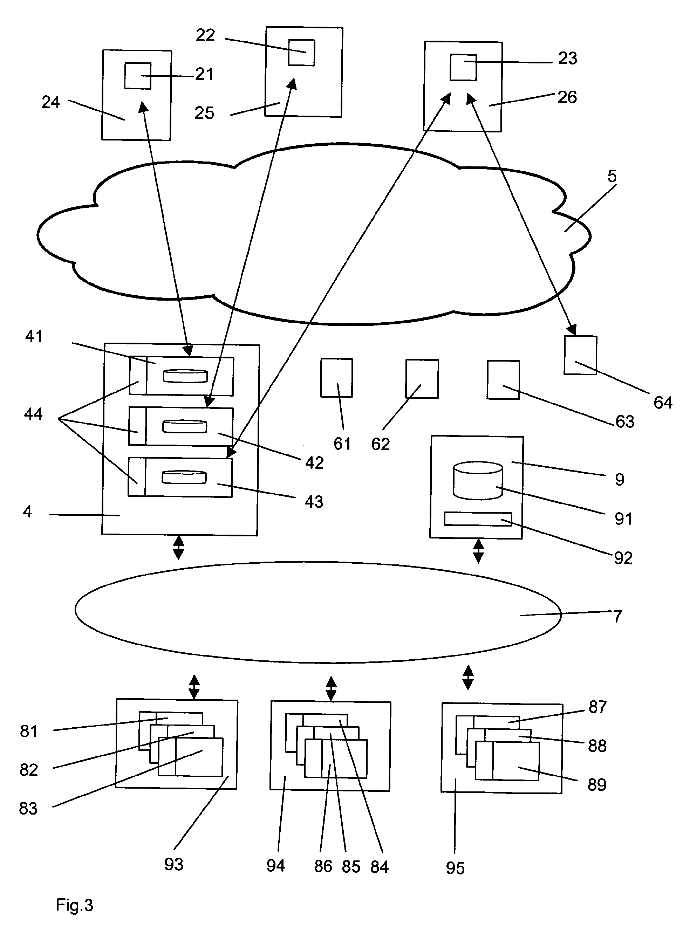

Fig. 3 shows an access server 4 for integrating content of existing web portals in an object oriented computing environment, a communication network 5, web servers 24, 25 and 26, a software bus 7 representing the infrastructure of an object oriented computing environment, a description server 9, servers 93 to 95 and terminals 61 to 64.

The communication network 5, the terminals 61 to 64 and the web servers 24 to 26 represent the recent infrastructure used for accessing of web content. The terminals 61 to 64 are personal computers, web-phones or mobile phones equipped with a web browser.

The communication network 5 is a data network using an internet protocol as level 3 communication protocol and thereby supporting the TCP/IP protocol stack (TCP = Transmission Control Protocol; IP = Internet Protocol).

The web servers 24 to 26 are linked to the communication network 5 and execute a set of server applications providing one or several web portals within the communication network 5. For example, Fig. 3 shows three web portals 21, 22 and 23 provided by the web servers 24, 25 and 26, respectively.

The terminals 61 to 64 access the web portals 21 to 23 via a web browser and HTTP interactions which are exchanged between the web browser and the respective web portal. For example, the user of the terminal 64 accesses content of the web portal 23 via a HTTP interaction indicated at Fig. 3.

The access server 4 is constituted by one or several interlinked computers, a software platform and a set of application programs executed on the aforementioned hardware platform. The functionalities of the access server 4 are provided by the execution of these software components on the hardware platform.

The access server 4 integrates content of web portals accessible via the communication network 5 in the object oriented computing environment interacting via the software bus 7. Exemplary, the access server 4 hosts three mediation objects 41, 42 and 43 each having the interface 44 for communicating within this object oriented computing environment.

The mediation objects 41, 42 and 43 are automatically or semi-automatically deployed by the service generator 1 after composition. The service generator 1 transfers the mediation object 41 to 43 to the access server 4. Dependent on the way of composition of the objects 41 to 43, the service generator 1 transfers in addition a library to the access server 4 containing the generic mediation object class.

Further the service generator 1 registers the deployed mediation objects 41, 42 and 43 in the description server 9 of the object oriented computing environment. In a registration data base 91 of the description server 9 it registers service properties of the content service provided by the mediation objects 41, 42 and 43 to objects interacting via the software bus 7. It transfers service addresses of the new service elements and description data assigned to the services. This description is a rough, high level description of the services provided by the mediation objects 41 to 43, in particular a specification of the content and semantical information about the content accessible via the mediation objects 41 to 44. Preferably, the service generator 1 automatically creates this description based on data of the data set 13. Further, the description contains information about the interface used by the mediation objects 41, 42 and 43 to provide the content to bring the requesting object in a position to properly interact with the mediation objects 41 to 43 for a content request.

The servers 43 to 45 deploy a plurality of objects capable to act via the software bus 7. Exemplary, Fig. 3 shows objects 81 to 83 hosted by the server 93, objects 84 to 86 hosted by the server 94 and objects 87 to 89 hosted by the server 95.

To access content provided by the access server 4, the objects 81 to 89 accesses the description server 9 and selects the service address assigned to the interesting content. Then, they contact the respective one of the mediation object 41, 42 to 43 via service requests using the object access protocol of the software bus 7, for example via a SOAP message.

## Claims

1. A method of generating services for integrating content of existing web portals (21, 22, 23) in an object-oriented computing environment (7),
**characterized in**
**that** the method comprising the steps of:
creating a description (13) of an existing web portal (21, 22); and
automatically composing a mediation object (41) having an interface (44) for communicating within the object oriented computing environment (7) based on a generic mediation object (11) and the created description (13) of an existing web portal (21), the created mediation object (41) is adapted to receive a service request from an object (81 to 89) of the object oriented computing environment (7), the request using a dedicated object access protocol, to convert the received service request to one or more content access requests adapted to the existing web portal (21) and transmitting said content access request to the corresponding web portal (41) using an appropriate protocol, to receive content data replied from the web portal (21) and to transmit said content data to the requesting object (81 to 89) of the object oriented computing environment using said dedicated object access protocol.

2. The method of claim 1,
**characterized in**
**that** the method comprising the further step of registering the created mediation object (41) in a description server (9) of the object oriented computing environment (7) to make known service properties of the content service provided by said created mediation object (41) to objects (81 to 89) interacting via the object oriented computing environment (7).

3. The method of claim 1,
**characterized in**
**that** the mediation object is encoded as web service object accessible via a SOAP interface.

4. The method of claim 1,
**characterized in**
**that** the description (13) of the existing web portal (21) provides a description of data and functionality of the web portal.

5. The method of claim 1,
**characterized in**
**that** the description of the existing web portal comprises an access address for addressing the existing web portal and syntactical information describing access capabilities to content of the web portal.

6. The method of claim 1,
**characterized in**
**that** the description of the existing web portal comprises sementical information about content of the web portal.

7. The method of claim 1,
**characterized in**
**that** the description (13) is formed by a template encoded in an extended markup language.

8. The method of claim 1,
**characterized in**
**that** the generic object (11) comprises a plurality of object oriented design primitives selected and substantiated during the composition based on the description (13) of an existing web portal (21).

9. An access server (4) for integrating content of existing web portals (21, 22, 23) in an object oriented computing environment (7),
**characterized in**
**that** the access server (4) comprises at least one mediation object (41, 42, 43) having an interface (44) for communicating within the object oriented computing environment (7), the mediation object (41, 42, 43) is adapted to: receive a service request from an object (81 to 89) of the object oriented computing environment (7), the request using a dedicated object access protocol; convert the received service request to one or more content access requests adapted to a specific existing web portal (21, 22, 23) and transmitting said content access request to the corresponding web portal (21, 22, 23) using an appropriate protocol; receive content data replied from the web portal (21, 22, 23); and transmit said content data to the requesting object (81 to 89) of the object oriented computing environment (7) using said dedicated object access protocol.

10. The access server (4) of claim 9,
**characterized in**
**that** the at least one mediation object (41, 42, 43) is associated with a dedicated existing web portal (21, 22, 23) and represents the content of this web portal in the object oriented computing environment (7).
